# EUROPEAN PATENT SPECIFICATION

(11) **EP 0 683 845 B1**
(45) Date of publication and mention of the grant of the patent: **10.03.1999**
(21) Application number: 95905971.8
(22) Date of filing: 16.12.1994
(51) Int. Cl.: E21B 17/00, F16L 7/00

(54) **DRILL PIPE**
BOHRGESTÄNGE
TIGE DE SONDAGE

(30) Priority: 22.12.1993 US 171410
(43) Date of publication of application: 29.11.1995
(73) Proprietor: THE CHARLES MACHINE WORKS INC, Perry, Oklahoma 73077 (US)
(72) Inventor: MARTIN, J., Scott, Perry, OK 73077 (US); STEPHENSON, Brent, G., Oklahoma City, OK 73122 (US)
(74) Representative: UEXKÜLL & STOLBERG
(86) International application number: US9414511
(87) International publication number: WO9517575

(56) References cited:
- EP-A- 0 580 271
- WO-A-95/17575
- US-A- 2 778 603
- US-A- 4 012 061
- US-A- 4 299 510
- US-A- 4 880 067

## Description

### TECHNICAL FIELD OF THE INVENTION

This invention relates to drilling, and in particular to drilling using a drilling fluid conveyed through drill pipe.

### BACKGROUND OF THE INVENTION

In drilling, a drill bit is typically rotated and moved forward in the borehole by a drill string made up of a number of individual drill pipes. Often, the drilling action of the bit is assisted by the flow of a drilling fluid or mud flowing through the drill pipe. The fluid is discharged at the drill bit to cool the bit and remove debris. The drilling fluid then flows out of the borehole in the annulus formed between the drill string and the wall of the borehole.

In horizontal drilling of the type used in trenchless drilling technology, fluid is typically discharged at the drill bit through a nozzle jet or jets to increase discharge velocity. Corrosion particles in the fluid tend to plug filter screens and nozzles, and reduce or block fluid flow. High quality steel drill pipe is typically coated on its inside surface to minimize the amount of corrosion and particle generation as the drilling fluid flows'through the pipe. Such a coating process is expensive. The extra coating requirement adds direct manufacturing costs, handling costs, inventory costs, environmental costs and quality costs to the finished product. To date, filling the entire interior volume of the drill pipe and conveying the drilling fluid in direct contact with the drill pipe interior wall has been the only mechanism to deliver the drilling fluid to the drill bit at the cutting face. However, a need exists to improve this delivery system and reduce the total costs of the drilling operation, including the costs of drill pipe manufacturing.

US-A-4,012,061 discloses a dual conduit drill member which forms two completely separated flow passages for drill fluid.

### SUMMARY OF THE INVENTION

This invention relates to a drill pipe as claimed in claim 1.

### BRIEF DESCRIPTION OF THE DRAWINGS

For a more complete understanding of the present invention and the advantages thereof, reference is now made to the following description taken in conjunction with the accompanying drawings, in which:
FIGURE 1 is a cross-sectional view of a drill pipe of welded construction forming a first embodiment of the present invention;
FIGURE 2 is a detail view of a hose fitting used in the first embodiment;
FIGURE 3 is a cross-sectional view of a box end used in the drill pipe of welded construction of FIGURE 1A;
FIGURE 4 is a cross-sectional view of a pin end used in the drill pipe of welded construction of FIGURE 1A;
FIGURE 5 illustrates a second embodiment of the invention with a drill pipe of arc welded construction with an internal conduit that is a rigid or flexible tube;
FIGURE 6 illustrates a modification of the second embodiment of the invention having a drill pipe with an internal conduit with arc welded ends having no extension;
FIGURE 7 illustrates a modification of the second embodiment of the invention having a drill pipe with an internal conduit, with the drill pipe of spin, inertia, or friction weld construction;
FIGURE 8 illustrates another modification of the second embodiment of the invention with an internal conduit that is a rigid or flexible tube and the drill pipe shows one type of forged upset end construction;
FIGURE 9 illustrates a third embodiment of the invention with a drill pipe of arc welded construction with an internal conduit that is a rigid or flexible tube which incorporates pipe nipples and insulator bushings;
FIGURE 10 is a view of the rigid or flexible tube;
FIGURE 11 is a view of the insulator bushing; and
FIGURE 12 is a view of the pipe nipple.

### DETAILED DESCRIPTION

As can be seen, the drill pipe is formed of a number of elements, including a cylindrical pipe section 12. At a first end of the pipe section is welded a box end 14. At the other end of the pipe section is welded a pin end 16. A tube or hose assembly is secured between the ends 14 and 16 and runs within the interior of the pipe section 12. The ends 14 and 16, and pipe section 12, are designed to transmit the forces, including torque, necessary for the drill bit to perform its function. The drilling fluid is conveyed between the ends 14 and 16 within the drill pipe through the hydraulic tube or hose assembly.

In addition, the size of the hydraulic hose assembly can be selected to optimize the flow characteristics of the drilling fluid being utilized. In the past, when the drilling fluid simply flowed through the interior volume 22 of the drill pipe, sufficient drilling fluid would have to be pumped into the drill string to fill up each drill pipe before the drilling fluid could be delivered at the drill bit with sufficient flow and pressure. Every time the drilling operation was halted, a portion of this drilling fluid would flow out of the drill string. To initiate further drilling, the lost drilling fluid would have to be replenished in the drill string before the drilling fluid would again be delivered to the drill bit with sufficient pressure and quantity. This procedure contributes to wastage of large volumes of drilling fluids, and drilling operation time delays. In addition to the high cost of drilling fluids, the fluids are becoming an ever greater environmental concern and the elimination of waste of the drilling fluid is an increasingly significant advantage.

The internal tube could be made of a variety of materials, including stainless steel, some other metal, plastic or composite construction.

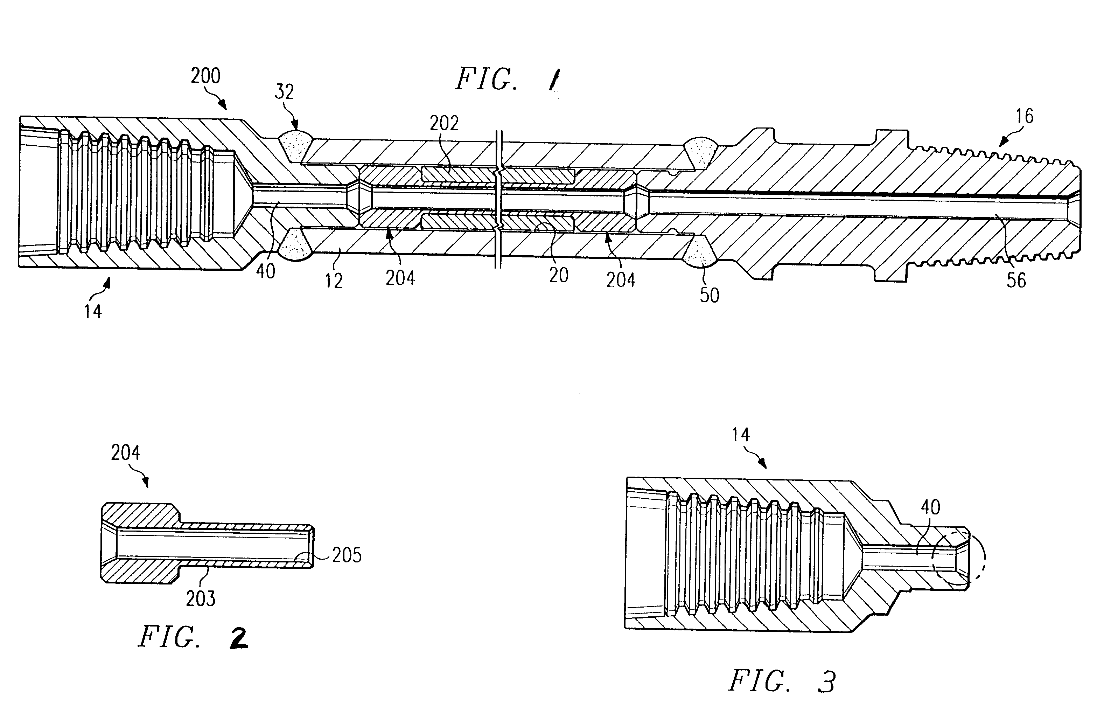

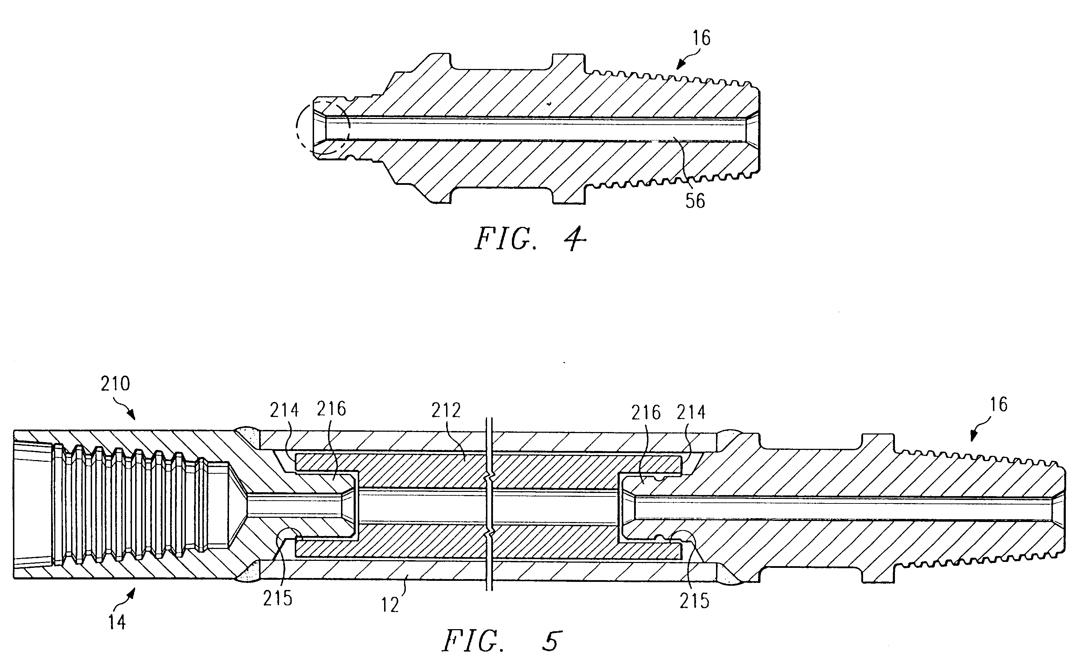

FIGURES 1 - 4 illustrate a first embodiment of the present invention forming a drill pipe 200. A number of elements of drill pipe 200 are identical in all embodiments and are identified by the same reference numerals. However, the hydraulic hose 202 utilized in drill pipe 200 has an outer diameter which is just slightly less than the inner diameter of the inner surface 20 of the pipe section 12. Also, inserted into each end of the hose is the reduced end portion 203 of a hose end fitting 204 as seen in FIGURE 2. The hose end fittings 204 contact the box end 14 and pin end 16 but are not attached or sealed thereto. A flow path is formed through passage 40, the passages 205 formed through hose fittings 204, the hose 202, and passage 56.

As noted, the hose fittings 204 are not sealed to or attached to the box end 14 and pin end 16. Thus, fluid is permitted to escape or leak between the abutting ends of the hose fittings and the ends 14 and 16 and into the annulus formed between the outer surface of the hose 202 and the inner surface 20 of the pipe section 12. During use, rust may form on the inner surface 20, but it is mostly trapped between the outer surface of the hydraulic hose 202 and the inner surface 20 and large quantities of rust particles will not therefore enter the main fluid stream passing through the interior of the hydraulic hose 202. The advantages of the present invention are therefore maintained as the interior volume of the drill pipe 200 is reduced by the volume of the hydraulic hose 202 and the hose fittings 204 and the rust problem is controlled. The difference in diameter between the outer surface of the hose and the inner surface of the pipe section was only 0.43 mm (.01675") in one drill pipe made in accordance with the teachings of the present invention.

The hose 202 can be sealed to the reduced diameter portions of the hose fittings 204 or not as desired. The use of hose fittings 204 is primarily to act as mechanical protection for the ends of the hydraulic hose 202, which otherwise would be exposed to the high pressure fluid flow traveling through the ends 14 and 16. Without such protection, this high velocity flow would likely tear, render or otherwise distort the hose which, in the worst case, could block the passage through the drill pipe.

The drill pipe 200 thus has a number of advantages over the previous embodiments described. Namely, as there is no concern to have sealed connections between the tube or hydraulic hose and the ends of the pipe, the cost of such fittings are eliminated. Further, the drill pipe can be made up quicker and with less effort because sealed connections are not used. Also, the unsealed tube or hose does not bear the stresses involved when a sealed tube holds a high internal pressure against a much lower external pressure. Thus, the conduit construction can be simpler and less expensive.

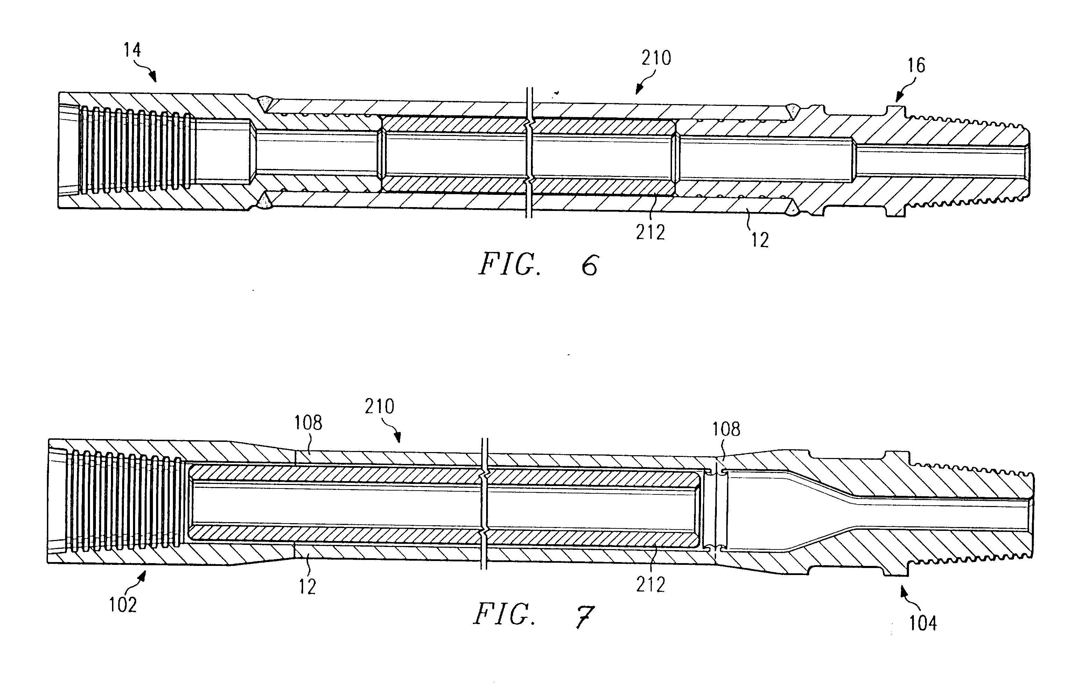

With reference to FIGURE 5, the drill pipe 210 can be seen to use a rigid or flexible tube 212, preferably of PVC plastic, which has an outer diameter very slightly less than the inner diameter of the pipe section 12 of the drill pipe 210. Again, the ends 214 of the tube or hose 212 can bear against the inner ends of the box end 14 and pin end 16 to form a continuation of the passage through the ends but without being sealed to the ends. Therefore, the fluid can again pass to the annulus between the outer diameter of the tube 212 and the inner surface 20 of the pipe section 12. However, again whatever rust generation occurs will be to a large extent trapped within that annulus.

The ends of the tube 212 are preferably drilled to form recesses 215 to receive an extension 216 of ends 14 and 16, with a clearance of preferably 1 mm (0.04 inches) between the outer surface of the extensions 216 of the ends 14 and 16 and the inner surface of recesses 215 in the tube 212.

With reference now to FIGURE 6, a drill pipe 210 can be seen to be formed having box end 14 and pin end 16 arc welded at welds onto the pipe section. The box end 14 and pin end 16 do not have extensions as described in the embodiments of FIGURES 1 - 5. The end of the tube 212 simply bears against the inner end of the box end 14 and pin end 16. Again, fluid can leak between the box end, pin end and tube 212 into the annulus between the outer surface of the tube 212 and the inner surface 20 of the pipe section.

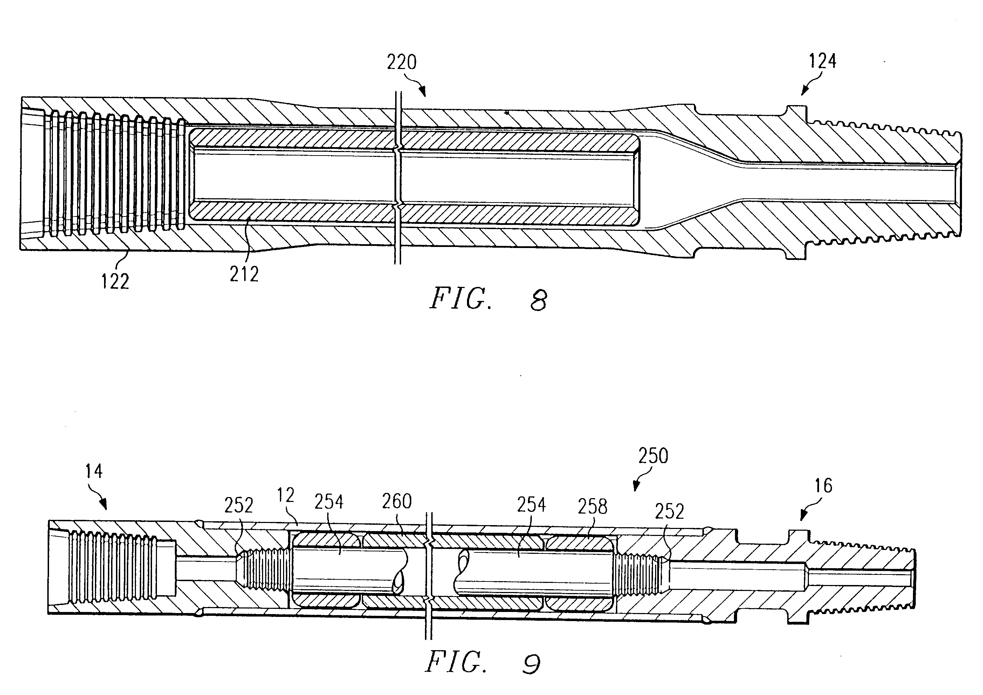

With reference to FIGURE 7, the drill pipe 210 can be seen to be formed having box end 102 and pin end 104 friction welded at welds 108 onto the pipe section 106. The tube 212 is again not sealed at its ends to the box end 102 and pin end 104. A flush trim is preferably done on the weld flash from the weld between the box end inside diameter 102 and the pipe section 12 to allow the tube 212 to be inserted into the interior volume of the drill pipe through the box end after the ends have been welded on the pipe section.

With reference to FIGURE 8, drill pipe 220 can be formed with forged upset ends 122 and 124 and/or machine, and/or threaded joint end or ends construction. The tube 212 would fit within the drill pipe 220 and bear against the forged upset end 124 to form a continuous passage through the drill pipe without being sealed to the upset ends. The tube is inserted into the drill pipe through the box upset end 122.

With reference now to FIGURES 9 - 12, a third embodiment of the invention is illustrated and is formed by drill pipe 250. Again, the drill pipe 250 is formed of a pipe section 12 with a box end 14 arc welded at one end of the pipe section 12 and a pin end 16 arc welded at the other end of the pipe section 12. Each of the ends 14 and 16 have a threaded aperture 252 formed at their inner ends which face the interior of the drill pipe.

Two pipe nipples 254 are provided which each have threaded ends 256. One threaded end of each of the pipe nipples 254 is threadedly engaged with the threaded aperture 252 in each of the ends 14 and 16. Thus, the pipe nipples 254 effectively form extensions of the box end and pin end into the interior of the pipe section.

An insulator bushing 258 is received over each of the pipe nipples 254 as shown in FIGURE 9. The inner diameter of the insulator bushing 258 is sufficiently larger than the outer diameter of the pipe nipple 254 to allow an easy slip fit over the nipple. There is no desire for a tight or sealed fit between the insulator bushing and the pipe nipple. The outer diameter of the insulating bushing is somewhat less than the inner diameter of the inner surface 20 of the pipe section 12.

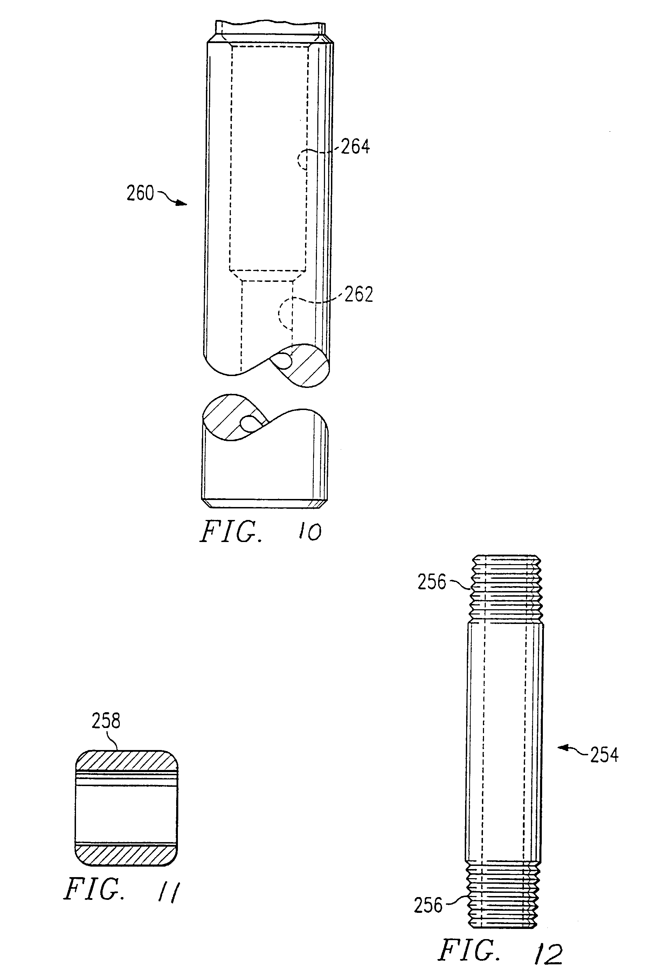

Rigid or flexible tube 260 is placed within the interior of the pipe section 12 with a portion of each of the pipe nipples 254 extending into the ends of the rigid or flexible tube 260. As best seen in FIGURE 10, the rigid or flexible tube has a bore 262 formed through its entire length to form a continuation of the passage through the drill pipe and a larger diameter recess 264 in each end of the tube to receive the ends of the pipe nipples 254. The rigid or flexible tube is preferably formed of PVC plastic. However, other materials are suitable including other plastics, various metals or composites. Of the metals, aluminum would be particularly suitable. In the composites, a composite wound tubing or plastic filament wound tubing or hydraulic hose would be suitable.

In one drill pipe constructed in accordance with the teachings of the present invention, the rigid tube 260 was formed of PVC having an outer diameter of about 3 cm (1.165 inches) and a bore of about 1.3 cm (.51 inch). The diameter of the recess was 1.83 cm (.719 inch) and the recess was about 5.6 cm (2.2 inches) deep. The insulator bushing had an outer diameter of 3 cm (1.165 inches) and an inner diameter of about 1.83 cm (.719 inch). The bushing was about 2.5 cm (one inch) long and was formed of well seasoned, select grade, yard lumber such as white birch, silver maple or big leaf maple.

The nipple was formed of Schedule 40 pipe steel having 10 mm (three-eighths inch) national pipe threads cut at each end. The nipple was about 9 cm (three and one-half inches) long. The outer diameter of the nipple was 1.7 cm (.675 inch) and the inner diameter was 1.25 cm (.493 inch) forming a wall thickness of 2.3 mm (.091 inch). The gap between the outer surface of the rigid tube and insulator bushings 258 and the inner surface 20 is in the range of 0.33 mm (0.013 inch) to 0.7 mm (0.028 inch).

The function of the insulator bushings 258 is to prevent damage to the PVC tube 260 as the ends 14 and 16 are being arc welded to the pipe section 12. In designs with friction welding and upset forming, the tube simply slips in the box end of the drill pipe after the pipe has been manufactured. Once the drill pipe has been used in service, the build up of fluids, grit and rust will usually cause the tubes to stay within the drill pipe unless effort is undertaken to remove them. Field replacement of worn or otherwise damaged liner tubes would be possible.

Although several embodiments of the invention have been illustrated and described with numerous specific details in the foregoing description and accompanying drawings, it will be understood that the invention is not limited to the embodiment disclosed, but is capable of numerous rearrangements, modifications and substitutions of parts and elements without departing from the scope of the invention.

## Claims

1. A drill pipe for use in a drill string rotating a drill bit or backreaming tool and conveying a drilling fluid, comprising:
a pipe section (12) having a first end and a second end;
a pin end (16; 104; 124) having a male fitted portion and a passage formed therethrough, the pin end secured to the first end of the pipe section;
a box end (14; 102; 122) having a female threaded portion and a passage formed therethrough, the box end secured to the second end of the pipe section; and
a drilling fluid conveying device (202; 212; 260) positioned between the pin end (16; 104; 124) and the box end (14; 102; 122) to convey drilling fluid through the pipe section interior;
**characterized** in that the conveying device (202; 212; 260) is not sealed to the pin end or box end such that fluid can leak between the box end, pin end and conveying device into the annulus formed between the conveying device and the pipe section.

2. The drill pipe of claim 1 wherein the drilling fluid conveying device includes a hose (212) having a first end and a second end, a first hose fitting (204) fit within the first end of the hose and a second hose fitting (204) fit within the second end of the hose.

3. The drill pipe of claim 1 wherein the drilling fluid conveying device is a tube (260).

4. The drill pipe of claim 3 wherein the tube (260) is made of PVC plastic.

5. The drill pipe of claim 1 wherein the pin end (16) and box end (14) are arc welded to the pipe section.

6. The drill pipe of claim 1 wherein the pin end (124) and box end (122) are upset forged from the pipe section.

7. The drill pipe of claim 1 wherein the pin end (104) and the box end (102) are friction welded to the pipe section.

8. The drill pipe of claim 1 wherein the pin and/or box ends are fixed or formed onto the pipe section by any combination of or design of interference fit, threaded, forged, or welded joint.

9. The drill pipe of one of claims 1 - 8, wherein the ends of the tube (212) are drilled to form recesses (215) to receive an extension (216) of box end (14) and pin end (16) with a clearance therebetween.

## Patentansprüche

1. Bohrstange zur Verwendung in einem Bohrgestänge, durch das ein Bohreinsatz oder ein Rückwärts-Räumwerkzeug gedreht und ein Bohrfluid gefördert wird, mit:
einem Rohrabschnitt (12), der ein erstes Ende und ein zweites Ende hat;
einem Stiftende (16; 104; 124), das einen außenliegenden Aufnahmebereich und einen Durchgang aufweist, der dadurch hindurchgehend ausgebildet ist, wobei das Stiftende an dem ersten Ende des Rohrabschnittes angebracht ist;
einem Muffenende (14; 102; 122), das einen Innengewindebereich und einen Durchgang aufweist, der dadurch hindurchgehend ausgebildet ist, wobei das Muffenende an dem zweiten Ende des Rohrabschnittes angebracht ist; und
einer Bohrfluid-Fördereinrichtung (202; 212; 260), die zwischen dem Stiftende (16; 104; 124) und dem Muffenende (14; 102; 122) angeordnet ist, um Bohrfluid durch das Innere des Rohrabschnittes zu fördern;
dadurch gekennzeichnet, daß die Fördereinrichtung (202; 212; 260) nicht gegen das Stiftende oder das Muffenende abgedichtet ist, so daß Fluid zwischen dem Muffenende, dem Stiftende und der Fördereinrichtung in einen Ring auslaufen kann, der zwischen der Fördereinrichtung und dem Rohrabschnitt ausgebildet ist.

2. Bohrstange nach Anspruch 1, bei der die Bohrfluid-Fördereinrichtung eine Röhre (212) mit einem ersten Ende und einem zweiten Ende, ein erstes Röhrenanschlußstück (204), das in das erste Ende der Röhre führt, und ein zweites Röhrenanschlußstück (204) aufweist, der in das zweite Ende der Röhre führt.

3. Bohrstange nach Anspruch 1, bei der die Bohrfluid-Fördereinrichtung eine Rohrleitung (260) ist.

4. Bohrstange nach Anspruch 3, bei der die Rohrleitung (260) aus PVC-Kunststoff hergestellt ist.

5. Bohrstange nach Anspruch 1, bei der das Stiftende (16) und das Muffenende (14) mit dem Rohrabschnitt lichtbogenverschweißt sind.

6. Bohrstange nach Anspruch 1, bei der das Siftende (124) und das Kastenende (122) aus dem Rohrabschnitt stauchgeschmiedet sind.

7. Bohrstange nach Anspruch 1, bei der das Stiftende (104) und das Muffenende (102) mit dem Rohrabschnitt reibverschweißt sind.

8. Bohrstange nach Anspruch 1, bei der das Stift- und/oder Muffenende durch eine beliebige Kombination oder Ausgestaltung aus Preßsitz-, Schraub-, Schmiede- oder Schweißverbindung an dem Rohrabschnitt angebracht oder daran ausgebildet sind.

9. Bohrstange nach einem der Ansprüche 1 - 8, bei der die Enden der Rohrleitung (212) gebohrt sind, um Aussparungen (215) zu bilden, um einen Vorsprung (216) des Muffenendes (14) und des Stiftendes (16) mit einem Freiraum dazischen aufzunehmen.

## Revendications

1. Tube de forage destiné à être utilisé dans une tige de forage pour faire tourner un trépan ou un outil de forage et pour transporter un fluide de forage, comprenant :
un tronçon de tube (12) ayant une première et une seconde extrémité ;
une broche d'extrémité (16 ; 104 ; 124) ayant une partie mâle et un passage formé à travers celle-ci, la broche d'extrémité étant fixée à la première extrémité du tronçon de tube ;
une boîte d'extrémité (14 ; 102 ; 122) ayant une partie taraudée femelle et un passage formé à travers celle-ci, la boîte d'extrémité étant fixée à la seconde extrémité du tronçon de tube ; et
un dispositif de transport de fluide de forage (202 ; 212 ; 260) positionné entre la broche d'extrémité (16 ; 104 ; 124) et la boîte d'extrémité (14 ; 102 ; 122) pour transporter du fluide de forage à travers l'intérieur du tronçon de tube ;
caractérisé en ce que le dispositif de transport (202 ; 212 ; 260) n'est pas scellé à la broche d'extrémité ou à la boîte d'extrémité de telle manière que du fluide peut fuir entre la boîte d'extrémité, la broche d'extrémité et le dispositif de transport jusque dans l'espace annulaire formé entre le dispositif du transport et le tronçon de tube.

2. Tube de forage selon la revendication 1, dans lequel le dispositif de transport de fluide de forage inclut un tuyau (2) ayant une première extrémité et une seconde extrémité, et un premier raccord de tuyau (204) emboîté à l'intérieur de la première extrémité du tuyau, et un second raccord de tuyau (204) emboîté à l'intérieur de la seconde extrémité du tuyau.

3. Tube de forage selon la revendication 1, dans lequel le dispositif de transport de fluide de forage est un tube (260).

4. Tube de forage selon la revendication 3, dans lequel le tube (260) est réalisé en matière plastique PVC.

5. Tube de forage selon la revendication 1, dans lequel la broche d'extrémité (16) et la boîte d'extrémité (14) sont soudées en l'arc sur le tronçon de tube.

6. Tube de forage selon la revendication 1, dans lequel la broche d'extrémité (124) et la boîte d'extrémité (122) sont forgées par rabattement depuis le tronçon de tube.

7. Tube de forage selon la revendication 1, dans lequel la broche d'extrémité (104) et la boîte d'extrémité (102) sont soudées par friction sur le tronçon de tube.

8. Tube de forage selon la revendication 1, dans lequel la broche d'extrémité et/ou la boîte d'extrémité sont fixées ou formées sur le tronçon de tube par une combinaison ou une conception quelconque parmi les joints à serrage par interférence, vissés, forgés ou soudés.

9. Tube de forage selon l'une des revendications 1 à 8, dans lequel les extrémités du tube (212) sont percées pour former des évidements (115) afin de recevoir un prolongement (216) de la boîte d'extrémité (14) et de la broche d'extrémité (16) avec un jeu entre ceux-ci.
